(19) Europäisches Patentamt / European Patent Office / Office européen des brevets

(11) **EP 3 025 119 B1**

(12) **FASCICULE DE BREVET EUROPEEN**

(45) Date de publication et mention de la délivrance du brevet:
**07.11.2018 Bulletin 2018/45**

(21) Numéro de dépôt: **14744316.2**

(22) Date de dépôt: **25.07.2014**

(51) Int Cl.:
***G01B 7/26*** (2006.01)

(86) Numéro de dépôt international:
**PCT/EP2014/066015**

(87) Numéro de publication internationale:
**WO 2015/011257 (29.01.2015 Gazette 2015/04)**

(54) **SYSTEME DE MESURE DE L'EPAISSEUR D'UNE COUCHE DE GOMME D'UN PNEUMATIQUE**

SYSTEM ZUM MESSEN DER DICKE EINER VERKLEIDUNGSSCHICHT EINES REIFENS

SYSTEM FOR MEASURING THE THICKNESS OF A TREAD LAYER OF A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2013 FR 1357409**

(43) Date de publication de la demande:
**01.06.2016 Bulletin 2016/22**

(73) Titulaire: **Compagnie Générale des Etablissements Michelin**
**63000 Clermont-Ferrand (FR)**

(72) Inventeurs:
• **LEDOUX, Thomas**
**F-63040 Clermont-Ferrand Cedex 9 (FR)**
• **MARTIN, Denis**
**F-63040 Clermont-Ferrand Cedex 9 (FR)**
• **MENEROUD, Patrick**
**F-38246 Meylan Cedex (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
DE-A1- 10 000 730     US-A- 4 804 912
US-A1- 2003 062 891     US-A1- 2009 000 370

## Description

## Domaine de l'invention

La présente invention est relative à un système de mesure de l'épaisseur d'une couche de gomme et plus particulièrement à la mesure de l'épaisseur de gomme restante d'une bande de roulement d'un pneumatique.

## État de la technique

De manière connue, la bande de roulement d'un pneumatique ou plus simplement pneumatique, qu'il soit destiné à équiper un véhicule de tourisme, poids lourd, Génie Civil ou autre..., est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un pneumatique est neuf, la bande de roulement a sa hauteur maximale. Cette hauteur initiale peut varier en fonction du type de pneumatique considéré ainsi que de l'usage auquel il est destiné ; à titre d'exemple, les pneumatiques « hiver » ont généralement une profondeur de sculpture supérieure à celle de pneumatiques « été ». Lorsque le pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du pneumatique, telle l'adhérence sur sol mouillé. De plus, les capacités d'évacuation d'eau diminuent fortement lorsque la profondeur des canaux des sculptures diminue.

Il est donc souhaitable de pouvoir suivre l'évolution de l'usure de la bande de roulement d'un pneumatique.

Un tel suivi est usuellement réalisé par observation visuelle de la bande de roulement par l'usager ou un garagiste avec ou sans une mesure effective avec une jauge de profondeur. Mais cette observation n'est pas très aisée à réaliser notamment sur les pneumatiques arrière d'accès plus difficile et n'est pas non plus très précise.

De nombreuses propositions ont été faites pour automatiser la mesure de la profondeur de sculptures de pneumatiques. De tels dispositifs peuvent être disposés sur le sol de roulage des véhicules. Ces dispositifs fonctionnent usuellement selon deux techniques, soit à base de systèmes optiques avec des caméras ou des lasers, soit à base de courants de Foucault.

Les systèmes à base de systèmes optiques sont coûteux, doivent être encastrés dans le sol de roulage et nécessitent une maintenance régulière. Les mesures sont de plus perturbées par des salissures et la présence ou des projections d'eau, de boue, de neige, etc.

Les documents US 7,578,180 B2 et WO 2008/059283 proposent des systèmes de mesure de l'épaisseur de la bande de roulement d'un pneumatique, comportant des capteurs sensibles aux courants de Foucault générés par un champ magnétique d'excitation dans l'armature de sommet du pneumatique. Ces systèmes sont disposés sur un sol de roulage.

US 2009/0000370 A1 décrit un système de mesure de l'épaisseur d'une couche de matériau caoutchouteux d'un pneumatique comprenant un boîtier avec une face d'application destinée à être en contact avec la face libre de la couche et un capteur placé dans le boîtier capable de mesurer la distance entre la face de la couche liée à une armature et la face libre. Le capteur comprend une bobine source de champ magnétique et une bobine sensible à la variation de flux magnétique.

Ces systèmes de mesures ne sont cependant pas totalement satisfaisants parce qu'ils sont sensibles à la conductivité électrique du sommet des pneumatiques et que celle-ci évolue d'un pneumatique à l'autre mais aussi en fonction de l'usage de ceux-ci. On constate une précision et une sensibilité des mesures insuffisantes.

## Description brève de l'invention

L'invention telle que décrite dans la revendication 1 a pour objet un système de mesure de l'épaisseur d'une couche de matériau caoutchouteux d'un pneumatique, la couche comportant une face liée à une armature adjacente réalisée avec au moins un matériau de perméabilité magnétique supérieure à la perméabilité magnétique de l'air et une face libre en contact avec l'air, et le système comprenant un boitier avec une face d'application destinée à être en contact avec la face libre de la couche et un capteur placé dans le boitier capable de mesurer la distance $d$ entre la face liée et la face libre de la couche de matériau caoutchouteux. Ce système est **caractérisé en ce que**, le capteur comportant une source de champ magnétique alternatif et un élément sensible à la variation de la densité de flux magnétique au voisinage de ladite bobine source, la source est une bobine et l'élément sensible est une deuxième bobine, et **en ce que** la fréquence et la puissance d'excitation de la bobine source sont telles que la densité de flux magnétique augmente entre l'armature adjacente et la bobine source, lorsque la distance $d$ diminue.

Le capteur du système de mesure selon un objet de l'invention a l'avantage de fonctionner en mode reluctant, donc avec, à puissance donnée, une fréquence d'excitation de la bobine plus faible que dans le cas d'un capteur similaire fonctionnant dans un mode sensible aux courants de Foucault. Il est à noter que dans le cas des armatures usuelles de sommet de pneumatiques, constitué de renforts métalliques noyés dans un matériau caoutchouteux peu conducteur, on ne détecte pas ou seulement de faibles courants de Foucault dans ces conditions opératoires.

Par ailleurs, la mesure en mode reluctant met à profit la perméabilité magnétique de l'armature adjacente et on constate que cela offre une grande sensibilité des mesures à toute variation de la distance *d*.

Selon un mode de réalisation préférentiel, la bobine de l'élément sensible est disposée entre la bobine source et la face d'application du boitier.

Dans ce mode de réalisation, l'amplitude de la tension aux bornes de la bobine de l'élément sensible augmente lorsque la distance *d* diminue.

Dans un autre mode de réalisation, la bobine source est positionnée entre la bobine de l'élément sensible et la face d'application.

Dans ce mode de réalisation, l'amplitude de la tension aux bornes de la bobine de l'élément sensible diminue lorsque la distance *d* diminue.

Les bobines de l'élément sensible et source peuvent aussi être disposées sans recouvrement de façon adjacente et sensiblement à la même distance de la face d'application du boitier.

Dans ce mode de réalisation, l'amplitude de la tension aux bornes de la bobine de l'élément sensible diminue aussi lorsque la distance *d* diminue.

Avantageusement, les bobines source et de l'élément sensible peuvent entourer, ou être entourées par, un matériau à haute résistivité électrique et haute perméabilité magnétique, tel une ferrite.

La ferrite peut être de forme variée, notamment en forme de U. Dans ce cas, la bobine source et la bobine de l'élément sensible peuvent chacune entourer une des branches latérales de la ferrite.

Dans ce mode de réalisation, la portée du capteur peut être améliorée simplement en augmentant la distance entre les deux extrémités du U.

On peut également augmenter cette portée en augmentant la section des pôles constitués par les deux barres parallèles de la ferrite en forme de U.

Selon des modes de réalisations très préférentiels, la source de champ magnétique alternatif a un couplage nul ou faible sur l'élément sensible en l'absence d'armature adjacente.

En conséquence, lorsque la source est alimentée en absence d'armature adjacente, elle génère une tension nulle ou faible sur l'élément sensible. Cela permet de diminuer fortement ou totalement le mode commun.

Avantageusement, les bobines, source et de l'élément sensible, sont des bobines plates et croisées.

Ce mode de réalisation a l'avantage de simplifier l'électronique de pilotage et de mesure associée et d'en diminuer le coût.

Par « bobines plates », on entend des bobines dont l'épaisseur est très inférieure à leurs autres dimensions.

L'utilisation de bobines plates permet d'obtenir un capteur de très faible épaisseur, de l'ordre du ou de quelques millimètres et ainsi de disposer d'un système complet que l'on peut déposer sur un sol de roulage sans devoir l'encastrer dans celui-ci. Comme ce système complet n'a que quelques millimètres d'épaisseur, les véhicules peuvent rouler sur lui sans devoir fortement limiter leur vitesse.

On entend par « bobines croisées » le fait que l'intersection entre les surfaces couvertes par chacune des bobines est non nulle et inférieure à la surface de la plus petite des deux bobines. De cette façon, le mode commun peut être annulé et la bobine élément sensible ne capte aucun signal en l'absence d'armature adjacente ; c'est-à-dire que la tension aux bornes de la bobine de l'élément sensible peut être nulle pour un réglage bien choisi avec une superposition partielle des deux bobines en conditions libres.

Selon un autre mode de réalisation, le capteur comporte au moins une bobine source et l'élément sensible comporte un ou plusieurs couples de bobines. Les bobines de chaque couple sont disposées symétriquement relativement à la bobine source. Les sorties de chacune des bobines de l'élément sensible sont reliées à une électronique de conditionnement et les sous-éléments ainsi réalisés sont connectés les uns aux autres, de telle sorte que le signal de sortie de l'ensemble est faible ou nul en l'absence d'armature adjacente.

Dans ce mode de réalisation, les axes de sensibilités de la bobine source, d'une part, et des bobines de l'élément sensible, d'autre part, préférentiellement, sont parallèles ou perpendiculaires.

Dans un mode de réalisation simplifié, on peut se passer d'électronique de conditionnement et réaliser une connexion galvanique entre les bobines de l'élément sensible de telle sorte que le signal de sortie de l'ensemble est faible ou nul en l'absence d'armature adjacente. Avantageusement, chaque bobine ayant un axe de sensibilité, les axes de sensibilité des bobines de chaque couple élément sensible sont confondus et les bobines des couples sont disposées de part et d'autre d'un plan de symétrie de la bobine source.

Selon un mode de réalisation particulier, le capteur comporte un matériau à haute résistivité électrique et haute perméabilité magnétique, tel une ferrite, qui respecte le couplage nul entre la source et l'élément sensible en l'absence d'armature.

La présence de ce matériau à haute résistivité électrique et haute perméabilité magnétique permet de favoriser le couplage entre l'armature et le capteur.

Ce matériau à haute résistivité électrique et haute perméabilité magnétique peut, à titre d'exemple, avoir la forme d'un H.

De préférence, le H est disposé dans le boitier avec les branches latérales normales à la face d'application du boitier.

Alors la source peut être une bobine disposée autour de la barre centrale du H.

La source peut aussi comporter deux bobines disposées chacune autour d'une branche latérale du H, de préférence de part et d'autre de la barre centrale du H.

La source peut aussi comporter quatre bobines disposées chacune autour d'une ½ branche latérale du H.

L'élément sensible peut comporter deux bobines disposées autour d'une même branche latérale du H, de part et d'autre de la branche centrale.

Il est aussi possible de disposer les deux bobines de l'élément sensible chacune sur une branche latérale distincte du H mais toujours de part et d'autre de la branche centrale du H.

On peut aussi utiliser comme élément sensible quatre bobines chacune autour d'une ½ branche latérale du H.

Selon un autre mode de réalisation, la source est une bobine de diamètre donné et l'élément sensible est constitué de deux bobines, la première bobine de l'élément sensible ayant un diamètre inférieur au diamètre de la bobine source et la deuxième bobine de l'élément sensible ayant un diamètre supérieur au diamètre de la bobine source, les trois bobines étant concentriques.

Il est à noter que par diamètre d'une bobine, on entend son diamètre extérieur.

Dans ce mode de réalisation, les deux bobines de l'élément sensible peuvent être reliées chacune à une électronique de conditionnement, et les deux sous-ensembles ainsi obtenus connectés l'un à l'autre, de telle sorte que, lorsque la bobine source est alimentée par un signal de fréquence non nulle, le signal de sortie de l'ensemble élément sensible soit faible ou nul en l'absence de couche adjacente.

Avec un réglage bien choisi du diamètre des deux bobines de l'élément sensible, il est également possible de réaliser une connexion galvanique directe entre les deux bobines de l'élément sensible de sorte que le signal de sortie de l'ensemble soit faible ou nul en l'absence de couche adjacente. Cela permet d'éviter l'utilisation d'une électronique de conditionnement pour chaque bobine élément sensible, mais cela impose un sens d'enroulement des deux bobines de l'élément sensible à l'inverse l'un de l'autre.

Dans ce cas l'électronique de commande du système de mesure est plus simple.

Avantageusement, les bobines source et de l'élément sensible sont des bobines plates.

Dans ce mode de réalisation la distance entre le capteur et une armature adjacente peut être évaluée à partir du signal de sortie U aux bornes de l'ensemble constitué par les deux bobines de l'élément sensible.

Ce mode de réalisation axisymétrique présente l'avantage d'être insensible à l'orientation des câbles métalliques constituant l'armature adjacente. Le capteur est donc insensible à l'anisotropie de la couche adjacente.

Dans tous les modes de réalisation, la source et l'élément sensible peuvent comporter chacun une ou plusieurs bobines.

Dans tous les modes de réalisation, la portée du capteur peut être améliorée simplement en augmentant le diamètre de la bobine source.

Dans les modes de réalisation avec une ferrite, la portée du capteur peut être améliorée simplement en augmentant la distance et/ou la section des pôles constitués par les extrémités de la ferrite.

La bobine source est alimentée par une source électrique alternative, avantageusement de fréquence inférieure à 500 kHz, on limite alors très fortement la génération de courants de Foucault dans l'armature adjacente de la couche. Par ailleurs, en dépassant une fréquence de 10 kHz, on s'affranchit des bruits classiques mesurés par une antenne en champ proche.

D'autre part, plus on augmente la fréquence d'alimentation pour un courant donné, plus on améliore la résolution temporelle de la mesure.

Par ailleurs, l'augmentation de la fréquence permet de diminuer le temps de mesure ce qui a un impact favorable sur la consommation électrique de l'ensemble.

Enfin, l'augmentation de la fréquence permet d'augmenter l'amplitude du signal de sortie de l'élément sensible, qu'il soit constitué d'une ou plusieurs bobines.

On a constaté qu'il est avantageux d'utiliser une fréquence d'alimentation comprise entre 40 et 150 kHz.

Ces limitations de fréquence permettent de limiter les courants de Foucault susceptibles de prendre naissance dans les renforts métalliques de l'armature du pneumatique.

De préférence, le système de mesure comporte un dispositif de mesure de l'amplitude du signal aux bornes de la ou des bobines de l'élément sensible.

Pour ce faire on peut alimenter la bobine source au moyen d'un courant sinusoïdal stationnaire connu, ce qui permet de fixer de façon répétable la densité de flux magnétique émis dans le voisinage du capteur, et on peut utiliser un dispositif de mesure de l'amplitude de la tension aux bornes de la ou des bobines constituant l'élément sensible.

Ce dispositif de mesure d'amplitude de la tension aux bornes de l'élément sensible peut mesurer en continu la tension ou utiliser un système de démodulation d'amplitude.

Le système de mesure est avantageusement disposé dans un boîtier non conducteur électrique et dont les matériaux ont une susceptibilité magnétique nulle ou suffisamment faible pour être assimilable à l'air ou le vide.

De préférence, la bobine source ayant un axe de sensibilité et le boitier ayant une face d'application contre la face libre de la couche dont l'épaisseur est à mesurer, la face d'application du boitier est normale ou parallèle à l'axe de sensibilité de la bobine source selon le mode de réalisation.

Le boitier peut être un boitier portatif.

Dans ce cas, le système de mesure selon un objet de l'invention peut être appliqué à la mesure de l'épaisseur de matériau caoutchouteux d'un flanc ou d'une gomme intérieure d'un pneumatique. Cette mesure peut être réalisée lors de la fabrication du pneumatique ou après la fin de celle-ci.

Le boitier peut aussi être apte à être disposé sur ou encastré dans un sol de roulage.

Dans ce cas, le système de mesure est de préférence appliqué à la mesure de l'épaisseur de matériau caoutchouteux restante d'une bande de roulement d'un pneumatique.

Bien entendu, chaque bobine source ou de l'élément sensible du système de mesure selon un objet de l'invention peut être constituée d'une pluralité de bobines connectées en série ou en parallèle.

De préférence, lorsque les bobines utilisées sont des bobines plates, chacune des bobines source et de l'élément sensible peut être réalisée sous forme de pistes conductrices enroulées en forme de spirales sur un support PCB ou plastronique.

Un support plastronique fait référence à une technologie qui permet l'impression de pistes conductrices et la fixation de composants électroniques directement sur des pièces plastiques obtenues par injection.

L'invention s'applique particulièrement aux pneumatiques comportant des renforts métalliques dans leur sommet et/ou leurs nappes carcasses tels ceux destinés à équiper des véhicules à moteur de type tourisme, SUV (*"Sport Utility Vehicles"*), comme des véhicules industriels choisis parmi camionnettes, « Poids-lourd » - c'est-à-dire métro, bus, engins de transport routier (camions, tracteurs, remorques), véhicules hors-la-route tels qu'engins de génie civil -, autres véhicules de transport ou de manutention.

**Description des Figures**

Les figures annexées illustrent plusieurs modes de réalisation d'un système de mesure selon un objet de l'invention en prenant comme exemple principal son application à la mesure de l'épaisseur de bandes de roulement de pneumatiques :

- la figure 1 est une vue en perspective d'un véhicule dont un pneumatique passe au-dessus d'un boitier comportant un système de mesure selon un objet de l'invention ;
- la figure 2 présente un boitier avec un système de mesure ;
- la figure 3 présente une coupe d'un pneumatique en contact avec le boitier du système de mesure ;
- la figure 4 présente de façon schématique la structure d'un capteur constitué d'une bobine source et d'une unique bobine élément sensible ;
- la figure 5 présente un exemple de mesures réalisées avec le capteur de la figure 4 ;
- la figure 6 présente de façon schématique la structure d'un capteur pour lequel les trois bobines le constituant sont concentriques ;

- la figure 7 présente de façon schématique un capteur comprenant une ferrite en forme de H;
- les figures 8 et 9 présentent des modes de réalisation alternatifs du capteur de la figure 7 ; et
- la figure 10 présente schématiquement une structure de l'électronique d'un système de mesure.

**Description détaillée de l'invention**

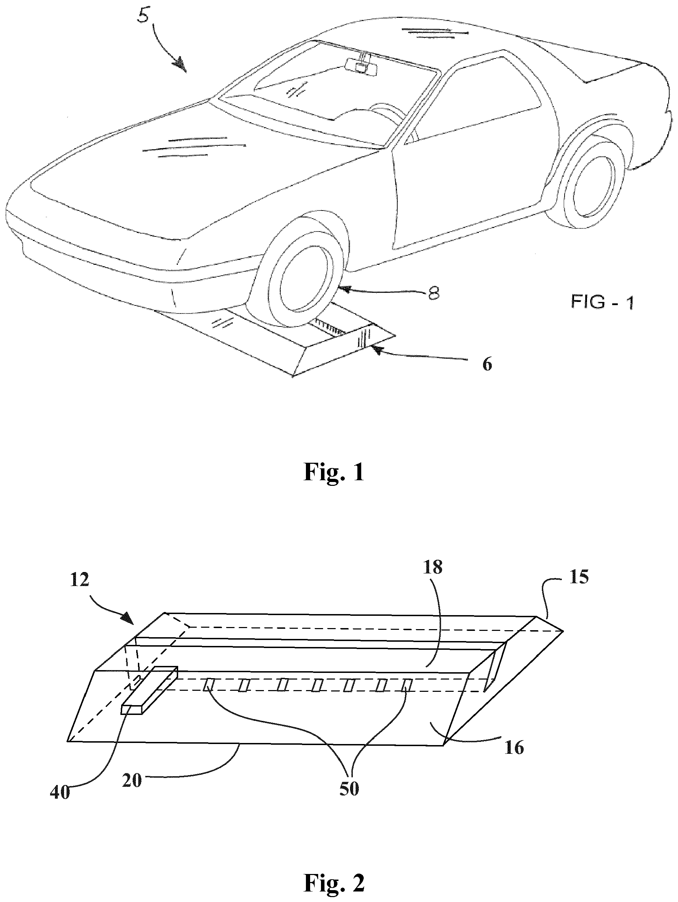

La figure 1 présente un véhicule 5 dont le pneumatique 8 roule sur un boitier 6 comportant un système de mesure de l'usure. La figure montre un véhicule de tourisme mais un tel système de mesure est aussi utilisable pour tout autre véhicule, tel un poids-lourd ou un car. La mesure de l'épaisseur restante de matériau caoutchouteux de la bande de roulement du pneumatique 8 est faite lorsque le pneumatique roule au-dessus du boitier 6 sans qu'il soit nécessaire d'arrêter le véhicule ou de démonter le pneumatique du véhicule.

La figure 2 illustre un boitier 12 selon l'un des objets de l'invention. Celui-ci se présente comme un ensemble portatif qui peut être déposé sur un sol de roulage. Il a une section droite sensiblement trapézoïdale. Le boitier comprend deux portions inclinées, une rampe d'accès 15 et une rampe de sortie 16. Entre les deux se trouve une portion 18 sensiblement horizontale. La portion 18 du boitier 12 protège un ou une rangée de capteurs 50 destinés à réaliser les mesures de distance. La base 20 du boitier est placée contre le sol de roulage et procure à celui-ci la stabilité nécessaire pendant le fonctionnement du système. Le boitier 12 comporte aussi une électronique 40 avec une source d'énergie qui alimente en courant alternatif les capteurs 50. Les mesures sont faites lorsque l'aire de contact du pneumatique repose sur la portion horizontale 18. Cette portion horizontale est la face d'application du boitier contre la surface de la bande de roulement du pneumatique. Le boitier 12 est réalisé en un matériau non conducteur dont les propriétés magnétiques sont assimilables à celles de l'air pour ne pas perturber les mesures.

Selon d'autres modes de réalisation, le boitier peut être encastré dans un sol de roulage ou de dimensions et de poids approprié pour pouvoir être appliqué contre un flanc ou une gomme intérieure d'un pneumatique.

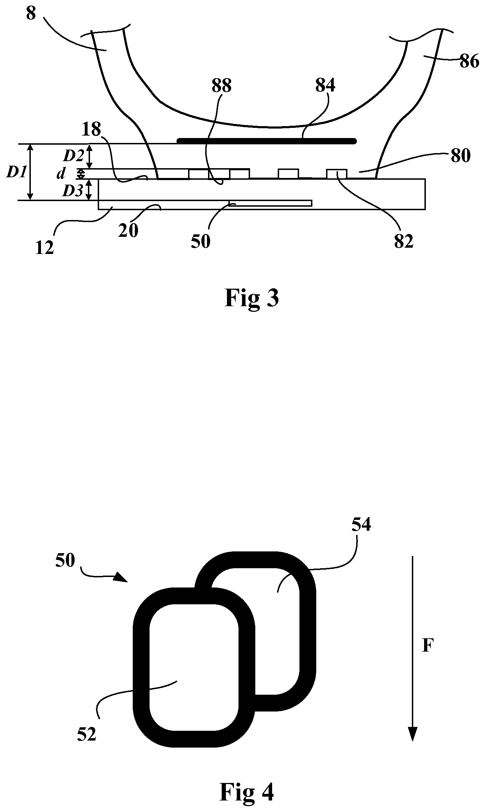

La mesure de l'épaisseur restante de matériau caoutchouteux d'une bande de roulement d'un pneumatique est illustrée à la figure 3. Cette figure présente une coupe partielle d'un pneumatique 8 en appui sur la face d'application 18 d'un boitier 12. Le pneumatique 8 comprend notamment une bande de roulement 80 avec des sculptures 82, une armature de sommet 84 constituée de deux ou plus nappes de renforts métalliques (non représentées), et de flancs 86. Le boitier 12 comprend une face d'application 18, une base 20 et une rangée de capteurs 50. La surface de roulage 88 de la bande de roulement 80 est en appui contre la face d'application 18 du boitier 12.

Les capteurs 50 mesurent, comme il sera expliqué ci-dessous, la distance *D1* qui les sépare de l'armature métallique 84 du sommet du pneumatique 8. *D1 a* trois composantes. Deux de ces composantes sont fixes, la distance *D2* qui sépare le fond des sculptures 82 de l'armature 84, et la distance *D3* qui sépare les capteurs 50 de la face d'application 18 du boitier 12. Une composante est variable avec le degré d'usure de la bande de roulement, c'est *d* qui correspond à l'épaisseur restante de la bande de roulement. On a :

$$d = D1 - D2 - D3$$

La distance *D2* peut être connue à partir de l'identification du type de pneumatique mesuré. Cette identification peut être manuelle ou automatique, par exemple en récupérant des données d'identification inscrites dans un transpondeur tel un RFID incorporé dans la structure du pneumatique.

Les figures 4, 6, 7, 8 et 9 présentent des modes de réalisation alternatifs de capteurs.

A la figure 4, le capteur 50 comprend deux bobines croisées. La première est la bobine source 52 et la deuxième est la bobine de l'élément sensible 54. Les deux bobines présentées sont des bobines plates de forme sensiblement rectangulaire mais des bobines de forme circulaire sont aussi tout à fait utilisables. Les deux bobines plates sont sensiblement dans un même plan parallèle au plan d'application de la bande de roulement d'un pneumatique. La flèche F indique le sens de roulage prévu.

Dans ce mode de réalisation l'intersection entre les surfaces couvertes par chacune des bobines est non nulle et inférieure à la surface de la plus petite des deux bobines. De cette façon, le mode commun peut être annulé et la bobine de l'élément sensible 54 capte peu ou pas de signal en l'absence d'armature adjacente ; c'est-à-dire que la tension aux bornes de la bobine de l'élément sensible 54 peut être faible ou nulle pour un réglage bien choisi avec une superposition partielle des deux bobines en conditions libres.

Des essais avec cette configuration de capteur ont été réalisés.

Une coupe de pneumatique radial pour véhicule Poids-lourd a été utilisée pour ces essais après avoir raboté le caoutchouc de la bande de roulement. Le zéro des mesures a été fait en conditions libres, c'est-à-dire lorsque la coupe est éloignée du capteur.

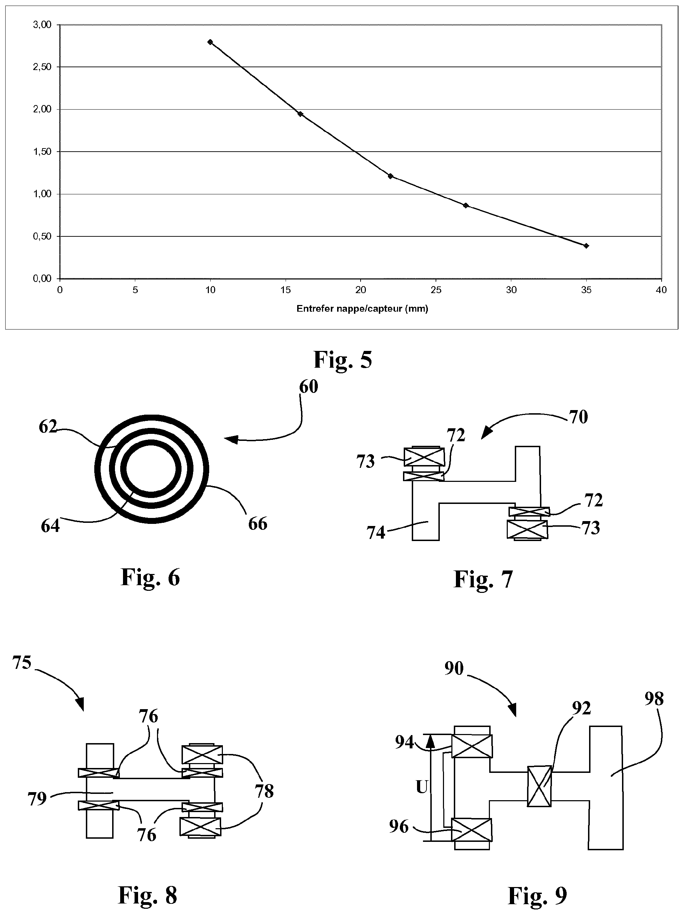

Puis on a progressivement rapproché la coupe du capteur. La figure 5 présente les résultats obtenus. En abscisse se trouve la distance de l'entrefer entre les renforts métalliques de l'armature sommet de la coupe et le plan des deux bobines du capteur, en ordonnée se trouve la valeur de l'amplitude maximale de la tension mesurée aux bornes de la bobine de l'élément sensible du capteur.

La bobine source a été alimentée à une fréquence de 40 kHz.

On observe une diminution très sensible de la tension aux bornes de la bobine de l'élément sensible d'un entrefer de l'ordre de 10 mm jusqu'à environ 30 mm.

Cela montre que le mode de fonctionnement du capteur selon l'un des objets de l'invention est bien un mode reluctant donc lié à la perméabilité magnétique des différentes parties du circuit magnétique constitué par la source et l'armature de sommet de la coupe dont on mesure la distance avec le capteur.

A la figure 6, le capteur 60 comporte une bobine source 62 et deux bobines 64 et 66 de l'élément sensible.

La bobine 64 de l'élément sensible a un diamètre inférieur au diamètre de la bobine source 62.

La bobine 66 de l'élément sensible a un diamètre supérieur au diamètre de la bobine source 62.

Les trois bobines sont concentriques de sorte que le capteur réalisé soit axisymétrique. Une telle configuration permet d'obtenir un effet de nappe très faible par rapport à d'autres modes de réalisation.

Dans ce mode de réalisation les deux bobines 64 et 66 de l'élément sensible sont connectées galvaniquement de sorte que le sens d'enroulement de la bobine 64 est l'inverse du sens d'enroulement de la bobine 66.

Dans cette configuration particulière, l'amplitude des signaux de sortie des deux bobines de l'élément sensible étant respectivement désignées U1 et U2, la distance entre le capteur et une armature adjacente peut-être évaluée à partir du signal de sortie U aux bornes de l'ensemble constitué par les deux bobines de l'élément sensible, tel que :

$$U = U1 + U2$$

Lorsque la bobine source est alimentée par un signal de fréquence non nulle et pour un réglage bien choisi du diamètre des deux bobines de l'élément sensible, le signal U peut-être faible ou nul en l'absence d'armature adjacente.

Ce mode de réalisation axisymétrique présente l'avantage d'être insensible à l'orientation des câbles métalliques constituant l'armature adjacente. Le capteur est donc insensible à l'anisotropie de cette couche adjacente.

La figure 9 présente un autre exemple de réalisation d'un capteur 90. Ce capteur 90 comporte une ferrite 98 en forme de H avec une bobine source 92 disposée autour de la branche centrale du H. Le capteur comprend aussi deux bobines 94 et 96 de l'élément sensible disposées chacune autour d'une même branche latérale du H. Les deux bobines 94 et 96 sont disposées symétriquement relativement à la bobine source, ici de part et d'autre d'un plan de symétrie de la bobine source ou encore de part et d'autre de la barre centrale du H.

Ces deux bobines 94 96 peuvent être connectées galvaniquement en série avec leurs enroulements inversés. Cela permet d'obtenir une configuration pour laquelle le signal de sortie de l'ensemble constitué des deux bobines de l'élément sensible est faible ou nul en l'absence de couche adjacente, ce qui permet de simplifier l'électronique nécessaire à la sortie du capteur.

Dans ce mode de réalisation il est possible d'évaluer la distance entre le capteur et une armature adjacente à partir de l'amplitude du signal de sortie U aux bornes de l'ensemble constitué par les deux bobines 94 et 96 de l'élément sensible.

La figure 7 montre un capteur 70 similaire à celui de la figure 9 dans lequel la source est constituée de deux bobines d'excitation 72 disposées chacune autour d'une barre latérale du H, de part et d'autre de la barre centrale et l'élément sensible de deux bobines 73 disposées chacune autour d'une barre latérale du H, de part et d'autre de la barre centrale du H.

La figure 8 montre un capteur 75 comportant une ferrite en forme de H 79, une source de champ magnétique composée de quatre bobines d'excitation 76 disposées chacune autour d'une 1/2 branche latérale du H et un élément sensible comportant deux bobines 78. Les deux bobines 78 sont disposées chacune autour d'une branche latérale du H, de part et d'autre de la branche centrale.

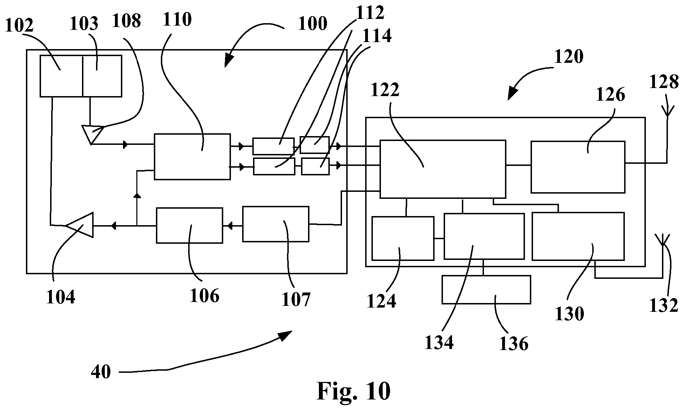

La figure 10 montre un exemple de la structure de l'électronique permettant la mesure d'épaisseur d'une couche de gomme de pneumatique, dans le cas d'un capteur constitué d'une bobine source 102 et d'un élément sensible 103 constitué d'une unique bobine, ou de plusieurs bobines connectées entre elles.

Cette électronique est constituée d'un «module capteur» 100 et d'une «carte mère» 120. Elle permet donc de réaliser une mesure d'épaisseur de couche en un unique point.

Pour étendre le principe de ce schéma à un système constitué d'une multiplicité de capteurs, il suffit d'utiliser plusieurs « modules capteurs » tous reliés à la même « carte mère ».

En mode reluctant, la tension U aux bornes de l'élément sensible 103 augmente lorsque la distance *d* entre le capteur et une armature d'une couche adjacente, constituée de câbles métalliques de pneumatique, diminue. Cette électronique a donc pour but de mesurer la valeur de cette tension U, afin de pouvoir déduire cette distance entre le capteur et l'armature de la couche adjacente.

Outre la bobine source 102 et l'élément sensible 103, le « module capteur » 100 est constitué, entre autre, d'un amplificateur en courant 104, piloté par un oscillateur 106 dont la fréquence est imposée par une base de temps 107. Les amplificateur, oscillateur et base de temps font partie du « module capteur ». Le courant généré par l'amplificateur 104 injecté dans la bobine source 102 est pris comme référence de phase (φ=0).

La tension U, de phase φ non nulle par rapport au courant I, prélevée aux bornes de l'élément sensible 103, est d'abord amplifiée par l'amplificateur 108 puis injectée dans un double démodulateur 110, de même que le signal de sortie de l'oscillateur 106.

En sortie du démodulateur 110, on trouve les signaux X et Y qui représentent les deux composantes complexes décrivant la tension aux bornes de l'élément sensible, telles que :

$$U = K\sqrt{X^2 + Y^2}$$

dans laquelle K est un facteur lié à l'amplification présente le long de la chaine électronique.

Les deux signaux X et Y sont ensuite filtrés par les filtres 112 et numérisés au moyen de convertisseurs analogique/numérique (ADC) 114, puis injectés dans le microcontrôleur 122 de la « carte mère » 120.

Le microcontrôleur 122 déduit de X et Y la valeur de la tension U aux bornes de l'élément sensible 103 en utilisant la formule ci-dessus.

La carte mère est également munie de plusieurs blocs fonctionnels additionnels :

- une mémoire 124 afin de permettre l'enregistrement des mesures réalisées par le capteur constitué de la bobine source 102 et de l'élément sensible 103 ;
- un décodeur RFID 126 qui permet l'identification du pneumatique, au moyen d'une antenne 128, lorsque cela peut se faire en mettant à profit la présence de RFID incorporé dans la structure du pneumatique ;
- un module de communication sans fil 130 qui permet l'envoi des informations à distance, via une antenne supplémentaire 132 ; et
- une alimentation 134 distribuant le courant nécessaire à l'ensemble du système, à partir d'une batterie 136.

L'ensemble a la capacité à réaliser des mesures nombreuses sur des pneumatiques, sans changement de batteries, ce qui confère au système une autonomie de plusieurs années sans intervention humaine

**Revendications**

1. Système de mesure de l'épaisseur d'une couche de matériau caoutchouteux d'un pneumatique, ladite couche comportant une face liée à une armature adjacente réalisée avec au moins un matériau de perméabilité magnétique supérieure à la perméabilité magnétique de l'air et une face libre en contact avec l'air, ledit système comprenant un boitier avec une face d'application destinée à être en contact avec ladite face libre de ladite couche et un capteur placé dans le boitier capable de mesurer la distance *d* entre la face liée et la face libre de ladite couche de matériau caoutchouteux, le capteur comportant une source de champ magnétique alternatif et un élément sensible à la variation de la densité de flux magnétique au voisinage de ladite bobine source, la source est une bobine et l'élément sensible est une deuxième bobine, et la fréquence et la puissance d'excitation de la bobine source sont telles que la densité de flux magnétique augmente entre l'armature adjacente et la bobine source, lorsque la distance *d* diminue, le système étant **caractérisé en ce que** la source de champ magnétique alternatif a un couplage nul ou faible sur l'élément sensible en l'absence d'armature adjacentes, et **en ce que** lesdites bobines source et de l'élément sensible sont plates et croisées.

2. Système de mesure selon la revendication 1, dans lequel la bobine de l'élément sensible est positionnée entre la bobine source et ladite face d'application dudit boitier.

3. Système de mesure selon la revendication 1, dans lequel la bobine source est positionnée entre la bobine de l'élément sensible et ladite face d'application dudit boitier.

4. Système de mesure selon la revendication 1, dans lequel la bobine de l'élément sensible et la bobine source sont positionnées sans recouvrement de façon adjacente et sensiblement à la même distance de ladite face d'application.

5. Système de mesure selon l'une quelconque des revendications précédentes, dans lequel lesdites bobines source et de l'élément sensible entourent, ou sont entourées par, un matériau à haute résistivité électrique et haute perméabilité magnétique, tel une ferrite.

6. Système de mesure selon l'une des revendications précédentes, dans lequel lesdites bobines source et de l'élément sensible entourent, ou sont entourées par, un matériau à haute résistivité électrique et haute perméabilité magnétique, tel une ferrite, qui respecte ledit couplage nul entre la source et l'élément sensible en l'absence d'armature.

7. Système de mesure selon la revendication 6, dans lequel le matériau à haute résistivité électrique et haute perméabilité magnétique a une forme de H.

8. Système de mesure selon la revendication 7, dans lequel le H est disposé dans le boitier avec les branches latérales normales à la face d'application du boitier.

9. Système de mesure selon l'une des revendications 7 et 8, dans lequel la source est une bobine d'excitation disposée autour de la barre centrale du H.

10. Système de mesure selon l'une des revendications 7 à 9, dans lequel la source comporte deux bobines d'excitation disposées chacune autour d'une branche latérale du H, de préférence de part et d'autre de la branche centrale du H.

11. Système de mesure selon l'une des revendications 7 à 9, dans lequel la source comporte quatre bobines d'excitation disposées chacune autour d'une demi branche latérale du H.

12. Système de mesure selon l'une des revendications 7 à 11, dans lequel l'élément sensible comporte deux bobines disposées autour d'une même branche latérale du H, de part et d'autre de la branche centrale.

13. Système de mesure selon l'une des revendications 7 à 11, dans lequel l'élément sensible comporte deux bobines disposées chacune sur une branche latérale distincte du H, de part et d'autre de la branche centrale.

14. Système de mesure selon l'une des revendications 7 à 11, dans lequel l'élément sensible comporte quatre bobines disposées chacune sur une ½ branche latérale du H.

15. Système de mesure selon l'une des revendications précédentes, dans lequel, la bobine source ayant un diamètre donné, l'élément sensible comporte deux bobines, le diamètre de la première étant supérieur au diamètre de la bobine source et le diamètre de la seconde étant inférieur au diamètre de la bobine source et les trois bobines étant concentriques.

16. Système de mesure selon la revendication 15, dans lequel les bobines source et de l'élément sensible sont des bobines plates.

17. Système de mesure selon l'une quelconque des revendications précédentes, dans lequel la source de champ magnétique alternatif comporte une ou plusieurs bobines.

18. Système de mesure selon l'une quelconque des revendications précédentes, dans lequel l'élément sensible comporte une ou plusieurs bobines.

19. Système de mesure selon l'une quelconque des revendications précédentes, dans lequel la bobine source est alimentée par une tension ou un courant électrique alternatif de fréquence inférieure à 500 kHz.

20. Système de mesure selon la revendication 19, dans lequel la bobine source est alimentée par une tension ou un courant électrique alternatif de fréquence supérieure à 10 kHz.

21. Système de mesure selon l'une des revendications 19 et 20, dans lequel la bobine source est alimentée par une tension ou un courant électrique alternatif de fréquence comprise entre 40 et 150 kHz.

22. Système de mesure selon l'une quelconque des revendications précédentes, comportant un dispositif de mesure de l'amplitude du signal aux bornes de la ou des bobines de l'élément sensible.

23. Système de mesure selon l'une quelconque des revendications précédentes, dans lequel chacune des bobines plates est réalisée sous forme de pistes conductrices enroulées en forme sensiblement de spirale sur un support PCB ou plastronique.

24. Système de mesure selon l'une quelconque des revendications précédentes, tel que le boitier est non conducteur électrique et dont les propriétés magnétiques sont assimilables à celles de l'air et tel que le boitier a une face d'application qui est parallèle ou normale à la direction de l'axe de sensibilité de la bobine source du capteur.

25. Système de mesure selon la revendication 24, tel que ledit boitier est un boitier portatif.

26. Système de mesure selon la revendication 24, tel que ledit boitier est apte à être disposé sur ou encastré dans un sol de roulage.

27. Application du système de mesure selon l'une quelconque des revendications précédentes à la mesure de l'épaisseur de matériau caoutchouteux restante d'une bande de roulement dudit pneumatique.

28. Application du système de mesure selon l'une quelconque des revendications 1 à 25 à la mesure de l'épaisseur de matériau caoutchouteux d'un flanc ou d'une gomme intérieure dudit pneumatique.

**Patentansprüche**

1. System zum Messen der Stärke einer Schicht aus kautschukartigem Material eines Reifens, wobei die Schicht eine mit einer angrenzenden Karkasse verbundene Fläche hergestellt aus wenigstens einem Material mit einer magnetischen Leitfähigkeit größer als die magnetische Leitfähigkeit der Luft und eine freie Fläche im Kontakt mit der Luft umfasst, wobei das System ein Gehäuse mit einer Anwendungsfläche, die ausgebildet ist, in Kontakt mit der freien Fläche der Schicht zu sein, und einen um Gehäuse angeordneten zum Messen des Abstands d zwischen der verbundenen Fläche und der freien Fläche der Schicht aus kautschukartigem Material ausgebildeten Sensor umfasst, wobei der Sensor eine Quelle für ein magnetisches Wechselfeld und ein für die Variation der magnetischen Flussdichte in der Umgebung der Quellspule empfindliches Element umfasst, wobei die Quelle eine Spule ist und das empfindliche Element eine zweite Spule ist, und die Erregungsfrequenz und -leistung der Quellspule so beschaffen sind, dass die magnetische Flussdichte zwischen der angrenzenden Karkasse und der Quellspule zunimmt, wenn der Abstand d abnimmt, wobei das System **dadurch gekennzeichnet ist, dass** die Quelle für ein magnetisches Wechselfeld eine Kopplung gleich Null oder geringe Kopplung auf dem empfindlichem Element bei Fehlen einer angrenzenden Karkasse aufweist, und dass die Quellspule und die Spule des empfindlichen Elements flach und gekreuzt sind.

2. System zum Messen nach Anspruch 1, wobei die Spule des empfindlichen Elements zwischen der Quellspule und der Anwendungsfläche des Gehäuses angeordnet ist.

3. System zum Messen nach Anspruch 1, wobei die Quellspule zwischen der Spule des empfindlichen Elements und der Anwendungsfläche des Gehäuses angeordnet ist.

4. System zum Messen nach Anspruch 1, wobei die Spule des empfindlichen Elements und die Quellspule ohne Abdeckung angrenzend und im Wesentlichen mit dem gleichen Abstand zur Anwendungsfläche angeordnet sind.

5. System zum Messen nach einem der vorhergehenden Ansprüche, wobei die Quellspule und die Spule des empfindlichen Elements ein Material mit hohem elektrischen Widerstand und hoher magnetischer Leitfähigkeit, etwa ein Ferrit, umgeben oder von solch einem Material umgeben sind.

6. System zum Messen nach einem der vorhergehenden Ansprüche, wobei die Quellspule und die Spule des empfindlichen Elements ein Material mit hohem elektrischen Widerstand und hoher magnetischer Leitfähigkeit, etwa ein Ferrit, umgeben oder von solch einem Material umgeben sind, das die Kupplung zwischen der Quelle und dem empfindlichen Element gleich Null bei Fehlen einer Karkasse erfüllt.

7. System zum Messen nach Anspruch 6, wobei das Material mit hohem elektrischen Widerstand und hoher magnetischer Leitfähigkeit eine H-Form aufweist.

8. System zum Messen nach Anspruch 7, wobei das H im Gehäuse mit den senkrechten Strichen senkrecht zur Anwendungsfläche des Gehäuses angeordnet ist.

9. System zum Messen nach einem der Ansprüche 7 und 8, wobei die Quelle eine um den Querstrich des H angeordnete Erregerspule ist.

10. System zum Messen nach einem der Ansprüche 7 bis 9, wobei die Quelle zwei jeweils um einen senkrechten Strich des H, vorzugsweise an beiden Seiten des Querstrichs des H, angeordnete Erregerspulen umfasst.

11. System zum Messen nach einem der Ansprüche 7 bis 9, wobei die Quelle vier jeweils um einen senkrechten Strich des H angeordnete Erregerspulen umfasst.

12. System zum Messen nach einem der Ansprüche 7 bis 11, wobei das empfindliche Element zwei um einen gleichen senkrechten Strich des H an beiden Seiten des Querstrichs angeordnete Spulen umfasst.

13. System zum Messen nach einem der Ansprüche 7 bis 11, wobei das empfindliche Element zwei um einen verschiedenen senkrechten Strich des H an beiden Seiten des Querstrichs angeordnete Spulen umfasst.

14. System zum Messen nach einem der Ansprüche 7 bis 11, wobei das empfindliche Element vier jeweils auf einer Hälfte des senkrechten Strichs des H angeordnete Spulen umfasst.

15. System zum Messen nach einem der vorhergehenden Ansprüche, wobei die Quellspule einen vorgegebenen Durchmesser aufweist, das empfindliche Element zwei Spulen umfasst, wobei der Durchmesser der ersten größer ist als der Durchmesser der Quellspule und der Durchmesser der zweiten kleiner ist als der Durchmesser der Quellspule, und die drei Spulen konzentrisch sind.

16. System zum Messen nach Anspruch 15, wobei die Quellspule und die Spule des empfindlichen Elements Flachspulen sind.

17. System zum Messen nach einem der vorhergehenden Ansprüche, wobei die Quelle für ein magnetisches Wechselfeld eine oder mehrere Spulen umfasst.

18. System zum Messen nach einem der vorhergehenden Ansprüche, wobei das empfindliche Element eine oder mehrere Spulen umfasst.

19. System zum Messen nach einem der vorhergehenden Ansprüche, wobei die Quellspule von einer Spannung oder einem Wechselstrom mit einer Frequenz kleiner als 500 kHz versorgt wird.

20. System zum Messen nach Anspruch 19, wobei die Quellspule von einer Spannung oder einem Wechselstrom mit einer Frequenz größer als 10 kHz versorgt wird.

21. System zum Messen nach Anspruch 19 oder 20, wobei die Quellspule von einer Spannung oder einem Wechselstrom mit einer Frequenz von 40 bis 150 kHz versorgt wird.

22. System zum Messen nach einem der vorhergehenden Ansprüche, umfassend eine Vorrichtung zum Messen der Amplitude des Signals an den Klemmen der Spule(n) des empfindlichen Elements.

23. System zum Messen nach einem der vorhergehenden Ansprüche, wobei jede der Flachspulen in der Form von gewickelten Leiterbahnen im Wesentlichen in Spiralform auf einem Leiterplatten- oder Kunststoffelektronik-Träger ausgeführt ist.

24. System zum Messen nach einem der vorhergehenden Ansprüche, wobei das Gehäuse elektrisch nicht leitend ist und die magnetischen Eigenschaften an die der Luft anpassbar sind, und wobei das Gehäuse eine Anwendungsfläche aufweist, die parallel oder senkrecht zur Richtung der Empfindlichkeitsachse der Quellspule des Sensors ist.

25. System zum Messen nach Anspruch 24, wobei das Gehäuse ein Trägergehäuse ist.

26. System zum Messen nach Anspruch 24, wobei das Gehäuse ausgebildet ist, auf einem Fahruntergrund angeordnet oder in diesem eingebettet zu werden.

27. Anwendung des Systems zum Messen nach einem der vorhergehenden Ansprüche auf das Messen der Stärke des restlichen kautschukartigen Materials einer Lauffläche des Reifens.

28. Anwendung des Systems zum Messen nach einem der Ansprüche 1 bis 25 auf das Messen der Stärke des kautschukartigen Materials einer Flanke oder eines Innengummis des Reifens.

**Claims**

1. System for measuring the thickness of a layer of rubber material of a tyre, the said layer comprising a face joined to an adjacent reinforcement made with at least one material having a magnetic permeability greater than the magnetic permeability of air and a free face in contact with the air, the said system comprising a casing with an application face intended to be in contact with the said free face of the said layer and a sensor placed in the casing and capable of measuring the distance *d* between the joined face and the free face of the said layer of rubber material, the sensor comprising a source of alternating magnetic field and an element sensitive to the variation in the magnetic flux density in the vicinity of the said source coil, the source is a coil and the sensitive element is a second coil, and the frequency and the excitation power of the source coil are such that the magnetic flux density between the adjacent reinforcement and the source coil increases as the distance *d* decreases, the system being **characterized in that** the source of alternating magnetic field has no or weak coupling to the sensitive element in the absence of an adjacent reinforcement and **in that** the said source coil and coil of the sensitive element are flat and crossed.

2. Measurement system according to Claim 1, in which the coil of the sensitive element is positioned between the source coil and the said application face of the said casing.

3. Measurement system according to Claim 1, in which the source coil is positioned between the coil of the sensitive element and the said application face of the said casing.

4. Measurement system according to Claim 1, in which the coil of the sensitive element and the source coil are positioned without overlap so that they are adjacent and substantially the same distance from the said application face.

5. Measurement system according to any one of the preceding claims, in which the said source coil and coil of the sensitive element surround, or are surrounded by, a material with high electrical resistivity and high magnetic permeability, such as a ferrite.

6. Measurement system according to Claim 6, in which the said source coil and coil of the sensitive element surround, or are surrounded by, a material with high electrical resistivity and high magnetic permeability, such as a ferrite, which obeys the said zero coupling between the source and the sensitive element in the absence of a reinforcement.

7. Measurement system according to Claim 6, in which the material having high electrical resistivity and high magnetic permeability is H-shaped.

8. Measurement system according to Claim 7, in which the H is positioned in the casing with the lateral branches normal to the application face of the casing.

9. Measurement system according to one of Claims 8 and 9, in which the source is an excitation coil positioned around the central bar of the H.

10. Measurement system according to one of Claims 7 to 9, in which the source comprises two excitation coils each one positioned around a lateral branch of the H, preferably on each side of the central branch of the H.

11. Measurement system according to one of Claims 7 to 9, in which the source comprises four excitation coils each one positioned around half a lateral branch of the H.

12. Measurement system according to one of Claims 7 to 11, in which the sensitive element comprises two coils positioned around one and the same lateral branch of the H, one on each side of the central branch.

13. Measurement system according to one of Claims 7 to 11, in which the sensitive element comprises two coils each one positioned on a distinct lateral branch of the H, one on each side of the central branch.

14. Measurement system according to one of Claims 7 to 11, in which the sensitive element comprises four coils each one arranged on half a lateral branch of the H.

15. Measurement system according to Claim 6, in which, with the source coil having a given diameter, the sensitive element comprises two coils, the diameter of the first being greater than the diameter of the source coil and the diameter of the second being less than the diameter of the source coil and the three coils being concentric.

16. Measurement system according to Claim 15, in which the source coil and the coil of the sensitive element are flat coils.

17. Measurement system according to any one of the preceding claims, in which the source of alternating magnetic field comprises one or more coils.

18. Measurement system according to any one of the preceding claims, in which the sensitive element comprises one or more coils.

19. Measurement system according to any one of the preceding claims, in which the source coil is supplied with an alternating voltage or an alternating current with a frequency of below 500 kHz.

20. Measurement system according to Claim 19, in which the source coil is supplied with an alternating voltage or current with a frequency higher than 10 kHz.

**21.** Measurement system according to one of Claims 20 and 21, in which the source coil is supplied with an alternating voltage or current with a frequency of between 40 and 150 kHz.

**22.** Measurement system according to any one of the preceding claims, comprising a device for measuring the amplitude of the signal at the terminals of the coil or coils of the sensitive element.

**23.** Measurement system according to any one of the preceding claims, in which each of the flat coils is produced in the form of conducting tracks wound in a substantially spiral shape on a PCB or plastronic support.

**24.** Measurement system according to any one of the preceding claims, such that the casing is not electrically conducting and the magnetic properties of which can be likened to those of air and such that the casing has an application face which is parallel or normal to the direction of the axis of sensitivity of the source coil of the sensor.

**25.** Measurement system according to Claim 24, such that the said casing is a portable casing.

**26.** Measurement system according to Claim 24, such that the said casing can be positioned on, or embedded in, a roadway.

**27.** Use of the measurement system according to any of the preceding claims for measuring the thickness of remaining rubber material on a tread of the said tyre.

**28.** Use of the measurement system according to any of Claims 1 to 25 for measuring the thickness of rubber material of a sidewall or of an internal liner of the said tyre.

FIG - 1

**Fig. 1**

**Fig. 2**

**Fig 3**

**Fig 4**

**Fig. 5**

**Fig. 6**

**Fig. 7**

**Fig. 8**

**Fig. 9**

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7578180 B2
- WO 2008059283 A

- US 20090000370 A1